# EUROPEAN PATENT APPLICATION

(11) **EP 4 800 530 A1**
(43) Date of publication of application: **02.09.2026**
(21) Application number: 26159507.8
(22) Date of filing: 19.02.2026
(51) Int. Cl.: G06F 3/01, G06F 3/0354, G06F 3/0488

(54) **ADAPTIVE TACTILE FEEDBACK TOUCHPAD WITH CUSTOMIZABLE TEXTURE SIMULATOR**

(30) Priority: 27.02.2025 US 202519065869
(71) Applicant: Microsoft Technology Licensing, LLC, Redmond, WA 98052 (US)
(72) Inventor: MENASHOF, ROEI SHLOMO, Redmond, 98052 (US); ZAGIEL, LIOR, Redmond, 98052 (US); ISTRIN, OREN, Redmond, 98052 (US)
(74) Representative: CMS Cameron McKenna Nabarro Olswang LLP

(57) **Abstract**

An adaptive tactile feedback touchpad with customizable texture simulation adapts feedback to provide realistic, nuanced sensations associated with different textures by sensing touch input attributes, such as input location and force, and determining additional touch attributes, such as direction and velocity, from a time-series set of touch inputs. Touchpad haptic actuators implemented in one or more axes of a touchpad can be controlled with varying amplitudes (e.g., weights) to provide consistent tactile sensations regardless of the location and direction that a user touches and moves a finger on the touchpad. A haptic waveform can be selected, for example, based on the simulated texture and input velocity while a waveform amplitude can be determined based on input force, direction, and velocity. The haptic actuator(s) can be controlled by the selected waveform and determined amplitude to provide realistic tactile sensations regardless where the user interacts with the touchpad.

## Description

### BACKGROUND

Computing devices often utilize touch input devices such as touchpads, which are touch-sensitive surfaces that allow users to control the computing devices using their fingers. For example, a touchpad is often utilized in portable computers as an integrated mouse but can also be used to provide additional forms of input. For instance, a touchpad can have integrated buttons a user can press or click and/or that can be configured to recognize selections based on gestures, such as tapping a finger on the touchpad once to perform a "select" and tap twice to perform an "open" (which mimics the pressing or double-clicking of a button). Other recognized gestures include, for example, sliding or dragging a finger to move a cursor, pinching two fingers to zoom in, separating two fingers to zoom out, swiping to scroll, to switch between applications, etc.

A touchpad may be integrated in a computing device (e.g., in a laptop) or may be communicatively coupled to the computing device as a wired or wireless peripheral device. A touchpad often includes a microcontroller (e.g., a system on a chip (SoC)) configured to process touch input data received by the touchpad's touch sensor in response to user touch. The microcontroller translates the touch inputs into cursor movements and selections while the user interacts with displayed content.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

An adaptive tactile feedback touchpad with customizable texture simulation is disclosed herein. The tactile feedback provided by the touchpad enables realistic, nuanced sensations associated with different textures by sensing touch input attributes, such as input location and force, and determining additional touch attributes, such as direction and velocity, from a time-series set of touch inputs. Further touch attributes may be used to enable even more nuanced adaptation of a relatively large area haptic actuator associated with a touchpad. One or more touchpad haptic actuators are implemented in one or more axes of a touchpad to provide tactile sensations over a relatively large area. For example, a haptic actuator implemented only in the x axis of a touchpad can be controlled with varying amplitudes to provide consistent tactile sensations regardless of the location and direction that a user touches and moves a finger on the touchpad. A haptic waveform is selected based on the simulated texture and input velocity while a waveform amplitude is determined based on one or more of input force, direction, and/or velocity. The haptic actuator(s) are controlled by the selected waveform and determined amplitude to provide realistic tactile sensations regardless of where the user interacts with the touchpad on the touchpad surface.

In an aspect, a computing device comprises a touchpad configured to provide touchpad haptic feedback via a haptic actuator. An application includes a user interface configured to receive a user's selection of a surface type for the touchpad to simulate by way of haptic feedback. The computing device comprises an operating system communication interface comprising an application programming interface (API) configured to provide the selected surface type to the touchpad. The device comprises a microcontroller configured to execute a haptic feedback algorithm, which includes a waveform selector, a touch sensor, an attribute determiner, an amplitude selector, and a haptic actuator. The waveform selector is configured to select a waveform for the touchpad haptic feedback based at least on a simulated surface type. The touch sensor is configured to detect at least one touch input to the touch pad. The attribute determiner is configured to determine at least one touch attribute based on the at least one touch input. The amplitude selector is configured to determine a weight based at least on the direction of the at least one touch input. The actuator controller is configured to actuate the haptic actuator to generate the touchpad haptic feedback according to the selected waveform and the determined weight.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of an example computing device with an adaptive tactile feedback touchpad with customizable texture simulation, in accordance with an embodiment.
FIG. 2 shows a block diagram of an example touchpad with customizable texture simulator with adaptive tactile feedback, in accordance with an embodiment.
FIG. 3 shows a block diagram of an example signal flow for adaptive tactile feedback with customizable texture simulation, in accordance with an embodiment.
FIG. 4 shows an example interaction diagram for adaptive tactile feedback with customizable texture simulation, in accordance with an embodiment.
FIG. 5 shows a flow diagram of providing adaptive tactile feedback with customizable texture simulation, in accordance with an example embodiment.
FIG. 6 shows a flowchart of a process for providing adaptive tactile feedback with customizable texture simulation, according to an example embodiment.
FIG. 7 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Computing devices often utilize touch input devices such as touchpads, which are touch-sensitive surfaces that allow users to control the computing devices using their fingers. For example, a touchpad is often utilized in portable computers as an integrated mouse but can also be used to provide additional forms of input. For instance, a touchpad can have integrated buttons a user can press or click and/or that can be configured to recognize selections based on gestures, such as tapping a finger on the touchpad once to perform a "select" and tap twice to perform an "open" (which mimics the pressing or double-clicking of a button). Other recognized gestures include, for example, sliding or dragging a finger to move a cursor, pinching two fingers to zoom in, separating two fingers to zoom out, swiping to scroll, to switch between applications, etc.

A touchpad may be integrated in a computing device (e.g., in a laptop) or may be communicatively coupled to the computing device as a wired or wireless peripheral device. A touchpad often includes a microcontroller (e.g., a system on a chip (SoC)) configured to process touch input data received by the touchpad's touch sensor in response to user touch. The microcontroller translates the touch inputs into cursor movements and selections while the user interacts with displayed content.

Other types of touch input devices include touch screens, gaming controllers, and styluses. A stylus may be configured to provide users with haptic feedback to mimic the sensation of writing or drawing on various types of media (e.g., paper, canvas, fabric). However, when providing input using a finger, a user is without haptic feedback unless a touch input device is configured to provide haptic feedback. Touchpad haptic feedback can be quite primitive compared to haptic feedback provided in handheld devices, such as gaming controllers and styluses. Handheld touch implements/devices (e.g., styluses) include relatively small, well-defined, areas that make continuous contact with the hand of a user, enabling consistent haptic feedback by relatively compact, precisely placed, haptic actuators. In contrast, touchpads include relatively large areas, with only a portion of which in contact with a user at any given time, making it difficult for the touchpad to provide consistent haptic feedback.

The inventive technology described herein overcomes these and further deficiencies of the art. In particular, an adaptive tactile feedback touchpad is disclosed that comprises customizable texture simulation. The tactile feedback is adaptable to provide realistic, nuanced sensations associated with different textures by sensing touch input attributes, such as input location and force, and determining additional touch attributes, such as direction and velocity, from a time-series set of touch inputs. A broader set of touch attributes (e.g., touch location, force, direction, velocity) allows nuanced adaptation of a relatively large area haptic actuator associated with a touchpad. In an aspect, one or more touchpad haptic actuators are implemented in one or more axes of a touchpad to provide tactile sensations over a relatively large area. For example, a haptic actuator implemented only in the x axis of a touchpad can be controlled with varying amplitudes (e.g., weights) to provide consistent tactile sensations regardless of the location and direction that a user touches and moves a finger on the touchpad (e.g., x direction, y direction, 45 degree angle, and so on). A haptic waveform can be selected, for example, based on the simulated texture and input velocity while a waveform amplitude can be determined, for example, based on input force, direction, and velocity. The haptic actuator(s) are controlled by the waveform and amplitude to provide realistic tactile sensations regardless of where the user interacts with the touchpad.

In an implementation, a computing device comprises a touchpad configured to provide touchpad haptic feedback via a haptic actuator. An application includes a user interface configured to receive a user selection of a surface type for the touchpad to simulate by way of haptic feedback. The device comprises an operating system communication interface comprising an application programming interface (API) configured to provide the selected surface type to the touchpad. The device comprises a microcontroller configured to execute a haptic feedback algorithm, which includes a waveform selector, a touch sensor, an attribute determiner, an amplitude selector, and a haptic actuator. The waveform selector is configured to select a waveform for the touchpad haptic feedback based at least on a simulated surface type. The selected waveform has one or more frequencies, intensities (amplitudes), phases, and/or other waveform attributes that activate the haptic actuators according to the chosen texture, such that the haptic actuators provide a realistic feeling to the user that their finger is being moved across paper, canvas, fabric, etc., having the corresponding texture, thereby enhancing the user experience. The touch sensor is configured to detect at least one touch input to the touch pad. The attribute determiner is configured to determine at least one touch attribute (e.g., direction, speed/velocity, pressure/force) based on the at least one touch input. The amplitude selector is configured to determine a weight (e.g., amplitude) based at least on the direction (e.g., direction, speed, and force) of the at least one touch input. The actuator controller is configured to actuate the haptic actuator to generate the touchpad haptic feedback according to the selected waveform and the determined weight. As such, the use of one or more touch attributes enables the actuator controller to generate touchpad haptic feedback using one or more actuators at least in the region of the detected touch, and with the appropriate weight(s) selected according to the determined direction, speed, and/or force. In this manner, the selected waveform is applied in a manner corresponding to the characteristics of the user's application of touch, which causes the actuator(s) to simulate in the touch screen the particular chosen texture type for the user's particular touch, thereby enhancing feel for the user.

A touchpad configured to provide adaptive haptic feedback simulates different textures through micro-vibrations and haptic pulses. The frequency of the haptic pulse together with the intensity (e.g., and fluctuations of the intensity), based on the velocity and pressure of the user input, creates different texture sensations so that the user can feel corresponding different textures. The touchpad is energy-efficient, easily integrable, and highly responsive to user input due to the integrated actuators being relatively small in size and not power hungry, and due to the signal processing being confined to times of touchpad use and consuming relatively little processor power and storage.

Haptic actuators generate micro-vibrations and haptic pulses that vary in intensity and frequency based on user input. The actuators are strategically placed to ensure uniform feedback across the entire surface.

Pressure and motion sensors detect the pressure and velocity of a user's finger or stylus. Sensor data is processed in real-time to adjust the haptic feedback, creating a dynamic and responsive tactile experience.

Feedback control algorithms process sensor data and control the haptic actuators. The algorithms provide a seamless and realistic texture simulation, adapting to different user interactions.

An OS communication interface provides a texture mapping API. A touchpad includes a software layer that communicates with the operating system to receive data about a finger/cursor location and the corresponding texture. The OS API allows applications to define texture zones on a display mapped to the touchpad. The touchpad generates haptic feedback that simulates textures in the various zones.

Adaptive tactile feedback is supported by real-time data exchange. An adaptive tactile feedback touchpad can be configured to continuously exchange data with the OS to synchronize the haptic feedback with the visual elements on the screen so that users feel the correct texture based on finger/cursor position and the application's context.

For example, a digital artist using a drawing application can switch between different texture simulations by a touchpad, such as paper, canvas, and fabric. As the artist moves a finger or stylus across the trackpad, the pressure and motion sensors detect the input and adjust the haptic feedback accordingly. The control algorithms process the data and activate the haptic actuators to simulate the chosen texture, providing a realistic drawing experience with adaptive tactile feedback provided by the touchpad (e.g., for finger input) or the stylus (e.g., for stylus input), such that the user feels as if their finger is being moved across paper, canvas, fabric, etc., having the corresponding texture.

Advantages or benefits of the embodiments described further herein include realistic and consistent tactile feedback that mimics the feel of simulated textures regardless of which location a user touches or moves on a touchpad while performing any task, whether document editing, digital arts, gaming, accessibility operations for visually impaired users, etc. Users can feel the difference between paper, canvas, and other surfaces, enhancing their creative and interactive experiences. The touchpad's haptic feedback is adapted to the type and number of haptic actuators, compensating for directional haptic feedback. The touchpad adjusts haptic feedback based on the velocity and pressure of the user's finger or stylus. This dynamic response creates a more realistic and immersive tactile experience.

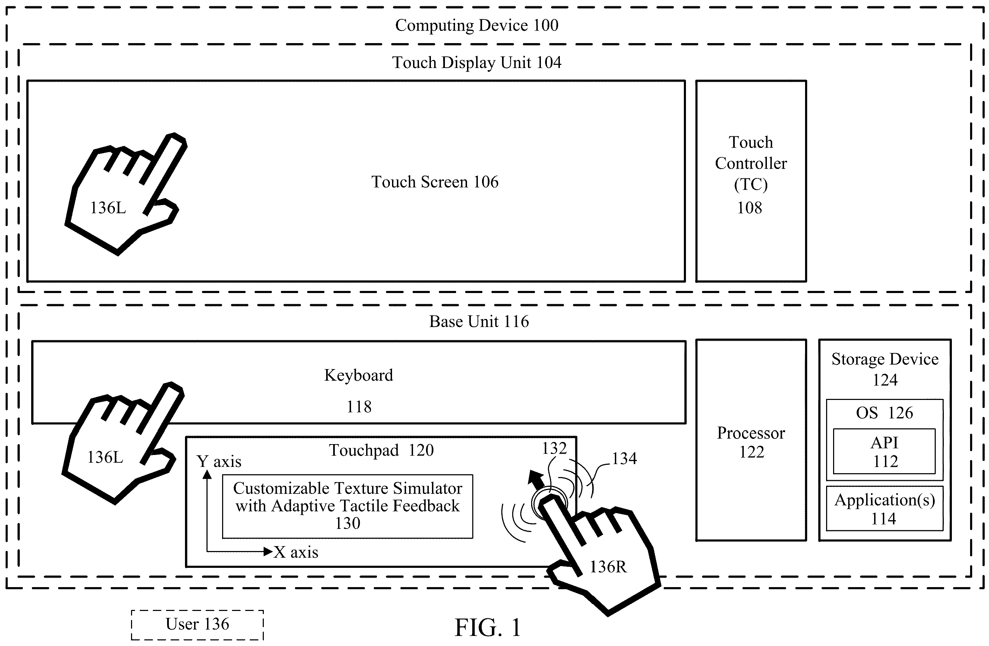

Embodiments disclosed herein can be configured in various ways. For instance, FIG. 1 shows a block diagram of a computing device 100 with an adaptive tactile feedback touchpad with customizable texture simulation, in accordance with an example embodiment. As shown in FIG. 1, computing device 100 includes a touch display unit 104 and a base unit 116. Touch display unit 104 includes a touch screen 106 and a touch controller (TC) 108. Base unit 116 includes a keyboard 118, a touchpad 120, a processor 122, and a storage device 124. Storage device 124 stores an operating system 126, which includes application programming interface (API) 112, and application(s) 114. Processor 122 executes executable instructions in OS 126 and application(s) 114. Note that touchpad and trackpad are used interchangeably herein. These components of computing device 100 are described in further detail as follows.

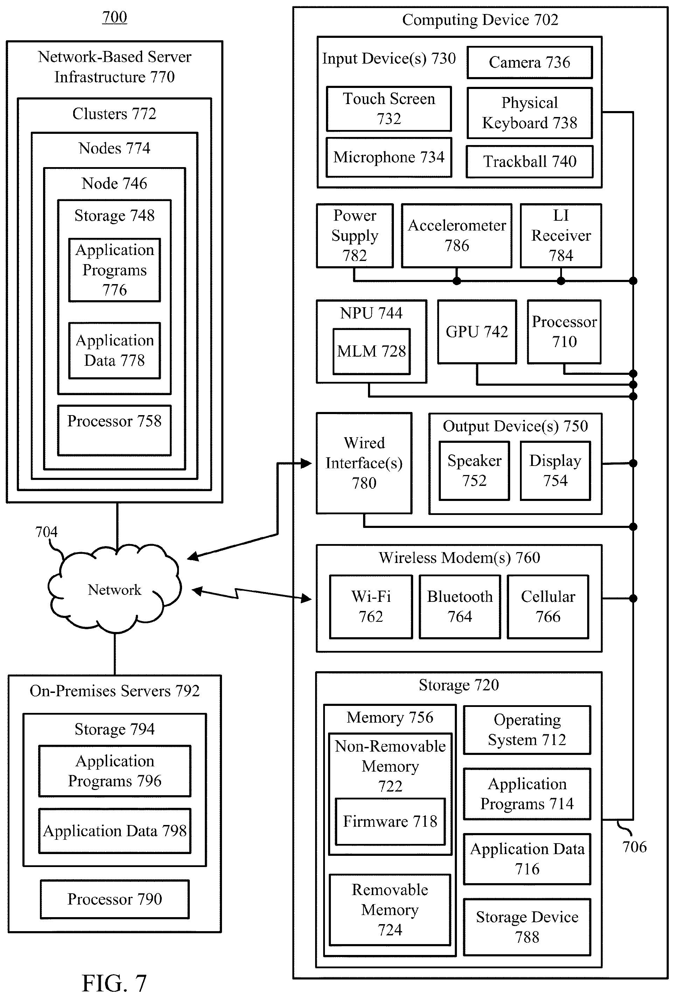

Computing device 100 may be any type of stationary or mobile computing device with a touch input device, including a mobile computer or mobile computing device (e.g., a 2-in-1 device, such as a Microsoft^{®} Surface^{®} device, a personal digital assistant (PDA), a laptop computer, a notebook computer, a tablet computer such as an Apple iPad^{™}, a netbook, etc.), a mobile phone, a wearable computing device, or other type of mobile device, or a stationary computing device such as a desktop computer or PC (personal computer), or a server, with at least one touch input device. Example computing device 100 presents one of many possible examples of computing devices. Another example computing device with example features is presented in FIG. 7.

As shown in FIG. 1, touch display unit 104 may include one or more user input devices, such as touch screen 106. Touch screen 106 provides a touch input device (e.g., digitizer) and a display. Touch screen 106 (e.g., the digitizer and display) may span the area of touch screen 106 even though not illustrated as such in FIG. 1. Base unit 116 may include one or more integrated and/or peripheral user input devices, such as keyboard 118 and touchpad 120. Other examples of computing devices may have the same, similar, and/or other types and configurations of input devices, such as a peripheral touchpad.

Touch display unit 104 (e.g., in an upper/lid portion of computing device 100) and base unit 116 may be physically connected (e.g., by a rotating connector or hinge, a separable connector) and may implement wired communication, or may be physically separate and implement wireless communication (e.g., by a Bluetooth connection). For example, computing device 100 (e.g., as shown) may comprise a repositionable notebook computer, a laptop computer, a 2-in-1 computer, a tablet with a case/cover (e.g., with a wired or wireless input device in the case/cover), etc.

Storage device 124 stores one or more applications 114, operating systems 126, virtual machines (VMs) (not shown), etc., that may be executed, hosted, and/or stored therein or via one or more other computing devices via network(s) (e.g., not shown). Computing device 100 may execute one or more processes. A process is any type of executable (e.g., binary, program, application) that is being executed by a computing device (e.g., via processor 122, touch controller (TC) 108, and/or the like). Computing device 100 may execute OS 126, API 112, and application(s) 114, which may support customizable texture simulator with adaptive tactile feedback 130.

Computing device 100 includes software and/or hardware interfaces for applications and/or users to select a mode of operation (e.g., a configuration), such as a texture simulation for touchpad 130. Examples of software interfaces include an operating system (OS) application programming interface (API) and a graphical user interface (GUI). A programming interface allows a program, such as application(s) 114, to select an operating mode (e.g., configuration) for computing device 100, which may include a texture to be simulated by touchpad 120. A simulated touchpad texture can be partitioned into different texture zones. For example, a gaming application aware that a user 136, whose hands are represented in FIG. 1 as a left hand 136L and a right hand 136R, uses touchpad 120 for input in response to imagery shown by touch screen 106 can map touch screen 106 to touchpad 120 and configure one or more texture zones to simulate a user touching fabric, stone, rubber, etc. by providing texture-specific adaptive tactile feedback 134 to user input 132. In this manner, the user playing the gaming application is enabled to experience actual in-game textures, which makes the game more immersive for the user, thereby enhancing their gameplay experience. In another example, a drawing or painting application allows a user to select a medium for touchpad 120 to simulate. A user interface allows user 136 to navigate and select an operating mode for computing device 100, which may include a texture to be simulated by touchpad 120. Similarly, application(s) 114 may provide a UI (e.g., GUI) that permits user 136 to select an operating mode (e.g., configuration), such as a texture simulation for touchpad 130. An example of a hardware interface is a (pre)programmed or programmable button (e.g., one or more keys on keyboard 118) a user can select to place computing device 100 in a (pre)programmed or programmable operating mode, such as selection of a texture associated with customizable texture simulator with adaptive tactile feedback 130.

As shown in FIG. 1, touch display unit 104 includes touch screen 106 and touch controller (TC) 108. Base unit 116 includes, for example, keyboard 118, touchpad 120, processor 122, and storage device 124. Other computing devices may have the same, similar, or different configuration of touch input devices, with or without other input devices.

Touch screen 106 includes display (e.g., a liquid crystal display (LCD), light emitting diode (LED) display) and touch digitizer ("digitizer") (e.g., an electrode/antenna grid or array) among other hardware, firmware and/or software components. Digitizer of touch screen 106 may comprise any type of digitizer, e.g., projected capacitance (mutual or self), in-cell, on-cell, out-cell, etc. Digitizer of touch screen 106 may be configured to detect touch, for example, via capacitive coupling with an instrument (not shown), a finger (not shown) in close proximity to touch screen 106.

Touch controller (TC) 108 (e.g., a programmed processor) controls at least digitizer of touch screen 106. TC 108 may receive and process touch signals detected by touch screen 106 (e.g., digitizer in touch screen 106). TC 108 may send processed touch signals to OS 126, e.g., for processing relative to OS 126 and/or one or more applications that user 136 may be interacting with via touch screen 106 using left hand 136L or right hand 136R.

TC 108 may control modes of operation of touch screen 106. Touch screen 106 may have a plurality of modes, e.g., touch or passive mode, active or pen mode, which may be implemented, at least in part, by TC 108. TC 108 may (e.g., in a touch or passive instrument mode), for example, drive a signal on at least one antenna (e.g. X or Y, row or column, vertical or horizontal portion of a grid) in the digitizer portion of touch screen 106, which may project an electric field over touch screen 106, and monitor the other antenna/electrode for changes (e.g. caused by a conductive pattern in proximity to touch screen 106). Signal changes may result in detected signals, each with an associated position and intensity/magnitude. TC 108 may (e.g., in an active instrument mode), for example, not drive a signal on an antenna and may (e.g. instead) monitor for (e.g. capacitively coupled) active signals in the digitizer portion of touch screen 106, where each detected signal may have an associated position and intensity/magnitude.

Touch screen 106 and touch controller 108 may generate positive and negative blobs, which may be configured, e.g., by a user. Touch screen 106 and touch controller 108 may detect touch, for example, based on one or more (e.g., configurable) signal intensity thresholds.

Touch screen 106 may have a detection pitch or resolution. A detection resolution may be a factor in determining conductive pattern shapes or symbols on edges, corners, etc. distinguishable from, for example, human touch. In an example, a detection resolution may be 4 to 6 mm.

Base unit 116 provides general processing (e.g., processor 122), general storage (e.g., storage device 124), and additional user input devices (e.g., keyboard 118, touchpad 120).

Storage device 124 may store, for example, operating system (OS) 126, API 112, and application(s) 114. Processor 122 loads and executes OS 126, which provides overall operation of computing device 100. OS 126 may provide a user interface for user 136 to select one or more textures and one or more texture zones to apply to trackpad 120, which may be implemented by customizable texture simulator with adaptive tactile feedback 130. Additional discussion of OS 126 is provided in discussion of FIG. 7 (e.g., OS 712). Processor 122 loads and executes API 112, which supports texture selection and zone mapping of touchpad 120 by application(s) 114. Processor 122 loads and executes application(s) 114, for example, in response to user selection of application(s) 114. Application(s) 114 may provide a user interface for user 136 to select one or more textures and one or more texture zones to apply to trackpad 120, which may be implemented by customizable texture simulator with adaptive tactile feedback 130.

Keyboard 118 is an input device that user 136 can use to provide input to computing device 100. In some examples, one or more keys may be programmed to indicate to customizable texture simulator with adaptive tactile feedback 130 to implement one or more texture simulations and/or texture zones for touchpad 120.

Touchpad 120 is an input device that user 136 can use to provide a variety of inputs to computing device 100. An example touchpad in a notebook computer (e.g., touchpad 120) may be, for example, approximately 90 mm x 150 mm (3-1/2 inches x 6 inches). Touchpad 120 may be implemented as a two dimensional area, e.g., along x and y axes. Touchpad 120 includes customizable texture simulator with adaptive tactile feedback 130.

Customizable texture simulator with adaptive tactile feedback 130 (e.g., if implemented as executable instructions) may be loaded from storage device 124 for execution by processor 122. Customizable texture simulator with adaptive tactile feedback 130 may be implemented in hardware, hardware combined with one or both of software and/or firmware, and/or as program instructions encoded on computer-readable storage media, configured to perform functions and/or operations described herein for touch feedback associated with interaction with touchpad 120.

Customizable texture simulator with adaptive tactile feedback 130 is configured to monitor the output of touch sensors and pressure sensors, to determine the type of input (e.g., by touch instrument or user touch), determine touch attributes (e.g., location, direction, velocity, force), determine whether to enable one or more actuators, select one or more actuators, select one or more waveforms for the one or more selected actuators to simulate selected textures in one or more zones, select one or more weights or amplitudes for the one or more waveforms, and drive the one or more actuators with one or more signals representative of the selected waveform(s) and amplitude(s) to provide the adaptive tactile feedback 134 in response to user hand touch 132. Expanded attributes, including user input direction, may be used by customizable texture simulator with adaptive tactile feedback 130 to select actuators and/or waveform amplitudes, which may be based on the type and/or axis of implementation of the actuator(s), to provide consistently realistic haptic feedback.

User 136 interacts with OS 126 and application(s) 114 displayed in a window or user interface by touch screen 106. User interactions include, for example, touching touch screen 106, typing on keyboard 118, and/or touching touchpad 120. User 136 can provide input to touchpad 120, for example, by hand (e.g., touch 132) and/or by input device (e.g., stylus, not shown). Touchpad 120 (e.g., customizable texture simulator with adaptive tactile feedback 130) may be configured to distinguish between hand input and instrument input, for example, to determine whether to enable tactile feedback 134, which may be limited to hand touch input 132. User input may be reflected in updates to imagery displayed by touch screen 106.

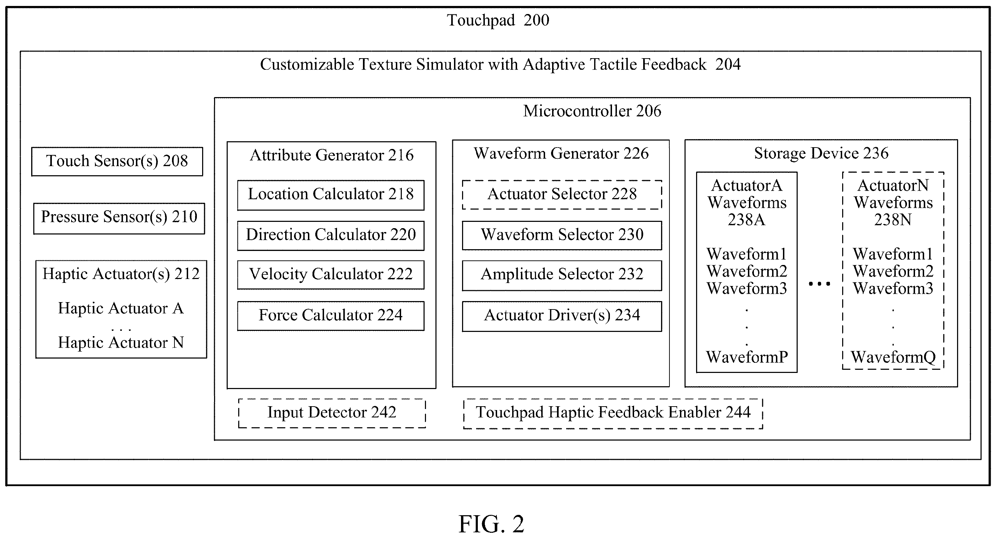

Touchpad 120 of FIG. 1 may be configured in various ways. For instance, FIG. 2 shows a block diagram of an example touchpad 200 with customizable texture simulator with adaptive tactile feedback 204, in accordance with an example embodiment. Touchpad 200 is an example of touchpad 120. As shown in FIG. 2, customizable texture simulator with adaptive tactile feedback 204 includes microcontroller 206, one or more touch sensors 208, one or more pressure sensors 210, and one or more haptic actuators 212 (e.g., haptic actuator(s) A-N). Microcontroller 206 includes an attribute generator 216, a waveform selector 226, a storage device 236, an input detector 242, and a touchpad haptic feedback enabler 244. Attribute generator 216 includes location calculator 218, a direction calculator 220, a velocity calculator 222, and a force calculator 224. Waveform selector 226 includes an actuator selector 228, a waveform selector 230, an amplitude selector 232, and an actuator driver(s) 234. Storage device 236 includes actuator A waveforms 238A through actuator N waveforms 238N. Dashed lines indicate optional features that may or may not be implemented.

Microcontroller 206 is a computer on a chip (e.g., an integrated circuit), including one or more processors, memory, and programmable inputs/outputs (I/O) configured to implement customizable texture simulator with adaptive tactile feedback 204, e.g., among other functions. Microcontroller 206 may be configured to process sensor data periodically. For example, microcontroller 206 may be configured to process sensor data every x us or ms to adapt tactile feedback according to the current user input and selected simulated texture.

Touch sensor(s) 208 detect locations where a user touches touchpad 200. Touch sensor(s) 208 may be resistive or capacitive. Resistive touchpads work similarly to resistive touchscreens while capacitive touchpads work similarly to capacitive touchscreens. Touch sensor(s) 208 utilizing resistive technology incorporate two slim layers beneath the outer surface that users touch. The upper layer deflects. User touch causes an electrical connection between the two layers that indicates a touch location. Touch sensor(s) 208 utilizing capacitive technology maintain an electrical charge across touchpad 200. A touch disrupts the charge in the area touched. Locations of connections may be indicated by x,y coordinates on the touchpad, which may be mapped to the display. Depending on the application or OS that a user is interacting with, the user's finger movement across the touchpad 200 can be translated on a display into a drawing, a cursor movement, etc.

Pressure sensor(s) 210 detect the pressure applied during a touch. Pressure sensor(s) 210 may be integrated with touch sensor(s) 208 or may comprise discrete pressure sensors. Pressure sensor(s) 210 can detect differences in force applied by a user while touching touchpad 200. Different levels of force applied by a user are reflected in the differences between signals (e.g., signal magnitudes) generated by pressure sensor(s) 208.

Haptic actuator(s) 212 generate haptic feedback in accordance with signals provided by actuator driver(s) 234. Haptic actuator(s) 212 include haptic actuator(s) A-N. In some examples, there may be only one haptic actuator. In some examples, there may be multiple haptic actuators. For example, a single haptic actuator may be implemented along an axis, e.g., an x axis or y axis, or a dual haptic actuator may be implemented along two axes, e.g., a first haptic actuator along the x axis and a second haptic actuator along the y axis. Implementation of few haptic actuators (including a single actuator) has the benefit of lower cost, while the use of greater numbers of haptic actuators enables greater flexibility with regard to haptic feedback. For instance, including a first haptic actuator along the x axis, and a second haptic actuator along the y axis, enables more pinpoint (e.g., specific coordinates) control in haptic feedback, and thereby to the simulation of surface type to a user, which thereby enhances user experience.

Attribute generator 216 generates one or more touch attributes based on signals generated by touch sensor(s) 208 and pressure sensor(s) 210. For example (e.g., as shown in FIG.2), attribute generator 216 includes location calculator 218, direction calculator 220, velocity calculator 222, and force calculator 224.

Location calculator 218 determines the location of a touch based on signals provided by touch sensor(s) 208. A touch may be provided at a single x,y coordinate or may span across multiple x,y coordinates in a path that has a single direction or multiple directions. For example, a touch may be a gesture using one or more fingers. A touch may be a tap. A touch may be a line in a single direction. Each x,y coordinate in the path of a touch may be associated with a time, for example, to determine velocity.

Direction calculator 220 determines the direction of a touch or multiple touches (e.g., if a user lifts a finger and presses down, as if drawing a dashed line). The direction of a touch may be determined relative to a reference axis. A reference axis may be, for example, the x axis, the y axis, the direction of the haptic actuator, etc.

Velocity calculator 222 determines the velocity of a touch based on signals provided by touch sensor(s) 208. Velocity may be determined, for example, based on the distance between a pair of x,y coordinates in a touch (e.g., or touches) divided by the difference in timestamps associated with the pair of x,y coordinates.

Force calculator 224 determines the force applied at x,y coordinates in a touch based on signals generated by pressure sensor(s) 210. User touch with a finger or instrument may apply the same or varying force throughout a touch input (e.g., a stroke).

Waveform generator 226 generates one or more waveforms for one or more haptic actuators 212. For example (e.g., as shown in FIG. 2), waveform generator 226 includes actuator selector 228, waveform selector 230, amplitude selector 232, and actuator driver(s) 234.

Actuator selector 228 is configured to select (e.g., determine) an actuator for determination and/or application of a haptic feedback waveform when more than one actuator is implemented in touchpad 200. Actuator selection may be based on the values of one or more touch parameters, e.g., touch velocity, direction, force, and the actuator implementation (e.g., actuator axis for each actuator).

Waveform selector 230 is configured to select (e.g., determine) one or more waveforms for each actuator based on the values of one or more touch parameters,. e.g., touch location, velocity, and the selected simulated texture and texture zone(s) in the area of touch input. Waveform selector 230 may be configured to select a waveform from waveforms stored on storage device 236. Waveforms may be generic (e.g., applicable to multiple actuators) or may be actuator specific (e.g., applicable to a single actuator). The dashed line for actuator N waveforms 238N is intended to show that there may be one or more actuators and that the waveforms for each simulated texture may be generic or actuator-specific.

Amplitude selector 232 is configured to select (e.g., determine) one or more amplitudes (e.g., weights, multipliers) for each haptic feedback waveform for each actuator involved in providing haptic feedback. Amplitude selection may be based on the values of one or more touch parameters, e.g., touch velocity, direction, force.

Actuator driver(s) 234 are configured to generate one or more waveforms for each actuator based on the selected waveform and amplitude. The driver waveform(s) is(are) provided to each haptic actuator to generate the haptic feedback for touchpad 200.

Storage device 236 stores waveforms for simulated textures, selectable by waveform selector 230. Waveforms may be the same or may vary for each haptic actuator. For example (e.g., as shown in FIG. 2), storage device 236 includes actuator A waveforms 238A through actuator N waveforms 238N.

Input detector 242 (e.g., when implemented) is configured to detect whether user input is by hand or by instrument. The determined type of input is provided to touchpad haptic feedback enabler 244 to determine whether to enable or disable haptic feedback by touchpad 200.

Touchpad haptic feedback enabler 244 (e.g., when implemented) is configured to enable or disable haptic feedback for touchpad 200, for example, based on whether input detector 242 detects user input by hand or by instrument. Haptic feedback may be disabled for touchpad 200, for example, when user input is by instrument that already provides haptic feedback to a user. As such, in embodiments, haptic feedback may be enabled or disabled for touchpad 200 depending on the situation. For instance, haptic feedback may be enabled for touchpad 200 in response to input detector 242 detecting that a user is interacting with touchpad 200 by hand, which enables touch feedback to be provided directly to the finger/hand of the touching user, enhancing user experience. Haptic feedback may also be enabled for touchpad 200 in response to input detector 242 detecting that a user is interacting with touchpad 200 through a writing instrument (e.g., a stylus), which enables touch feedback to be provided to the hand of the touching user through the writing instrument, thereby improving user experience in using the touch instrument. Furthermore, haptic feedback may be disabled for touchpad 200 in response to input detector 242 detecting that a user is interacting with touchpad 200 through a writing instrument that itself provides haptic feedback to the user. This disabling prevents conflicting touch feedback to be provided to the user by both the writing instrument and touchpad 200 simultaneously, which could otherwise interfere with each other and decrease user experience.

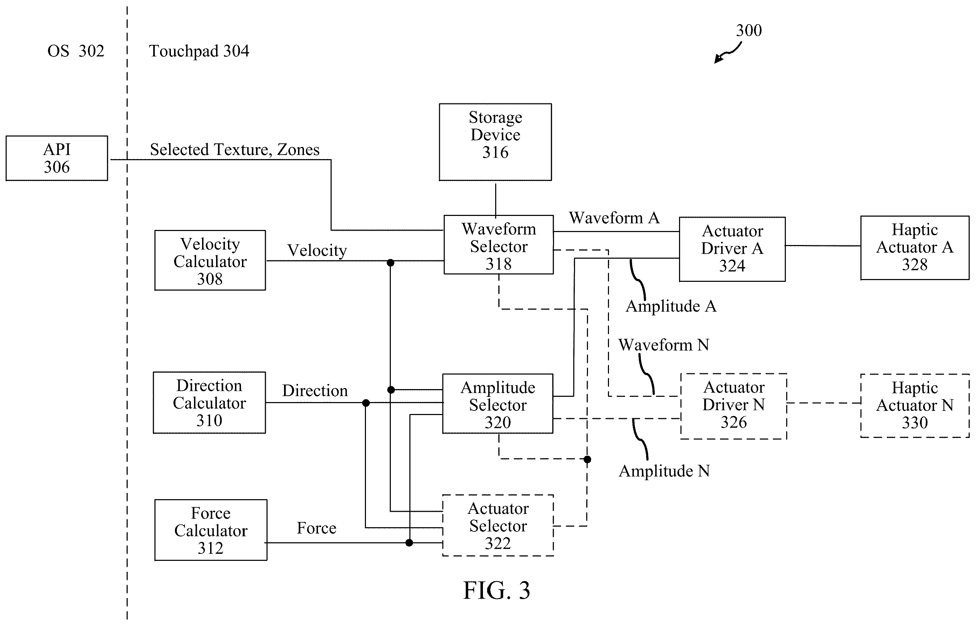

Touchpads 120 and 200 may operate in various ways. For instance, FIG. 3 shows a block diagram of an example signal flow 300 for adaptive tactile feedback with customizable texture simulation, in accordance with an example embodiment. As shown in FIG. 3, signal flow 300 includes a flow of signals between and among an operating system (OS) 302 and a touchpad 304. OS 302 is an example of OS 126 (FIG. 1) and touchpad 304 is an example of touchpads 120 and 200 (FIGS. 1 and 2). OS 302 includes an API 306 (an example of API 112 of FIG. 1), which provides applications with an interface to communicate information to and receive information from touchpad 304. For example, an application may use API 306 to provide (e.g., signal) to waveform selector 318 the texture and/or texture zones that a user selected in the application and/or that the application implements unilaterally (e.g., gaming application) as a user interacts with the application. Touchpad 304 includes a velocity calculator 308, a direction calculator 310, a force calculator 312, a storage device 316, a waveform selector 318, an amplitude selector 320, an actuator selector 322, actuator drivers A 324-N 326, and haptic actuators A 328- N 330. Note that any number of actuator drivers and corresponding haptic actuators may be present as desired for a particular implementation. Dashed lines show components and signaling related to optional implementation of multiple actuators. These components of signal flow 300 are described in further detail as follows.

Touchpad 304 shows an example of signals flowing between components shown in FIG. 2. For example, velocity calculator 308 calculates touch velocity, which is provided to waveform selector 318, amplitude selector 320, and actuator selector 322. Direction calculator 310 calculates touch direction, which is provided to amplitude selector 320 and actuator selector 322. Force calculator 312 calculates touch force, which is provided to amplitude selector 320 and actuator selector 322.

Waveform selector 318 determines one or more waveforms for one or more actuators based on the selected texture, texture zones (if any), and touch velocity parameter. Waveform selector 318 receives an actuator selection signal from actuator selector 322, indicating which actuators require waveforms for haptic feedback, e.g., if there are multiple actuators. Waveform selector 318 signals selection(s) of waveform(s) to storage device 316, for example, to retrieve waveform A to provide to actuator driver A 324, to provide waveform N to provide to actuator driver N 326, etc.

Amplitude selector 320 determines one or more amplitudes for one or more waveforms for one or more actuators based on the touch velocity, direction, and force parameters. Amplitude selector 320 receives an actuator selection signal from actuator selector 322, indicating which actuators require determination of waveform amplitudes for haptic feedback, e.g., if there are multiple actuators. Amplitude selector 320 signals the determined or selected waveform amplitude(s) to the actuator(s), e.g., amplitude A to actuator driver A 324, amplitude N to actuator driver N 326, etc.

Actuator selector 322 is implemented when a touchpad has more than one actuator. Actuator selector 322 determines which actuator(s) will generate haptic feedback in response to a user input. Actuator selector 322 signals waveform selector 318 to indicate which actuator(s) to generate waveforms for. Actuator selector 322 signals amplitude selector 320 to indicate which waveforms to generate amplitudes for.

Actuator driver A 324 receives waveform A from waveform selector 318 and amplitude A from amplitude selector 320. Actuator driver A 324 uses the received waveform and amplitude signals to generate a driver signal to drive haptic actuator A 328 to generate its portion of the haptic feedback for touchpad 304 in response to the user input.

Actuator driver N 326 receives waveform N from waveform selector 318 and amplitude N from amplitude selector 320. Actuator driver N 326 uses the received waveform and amplitude signals to generate a driver signal to drive haptic actuator N 330 (e.g., when implemented and when selected for actuation) to generate its portion of the haptic feedback for touchpad 304 in response to the user input.

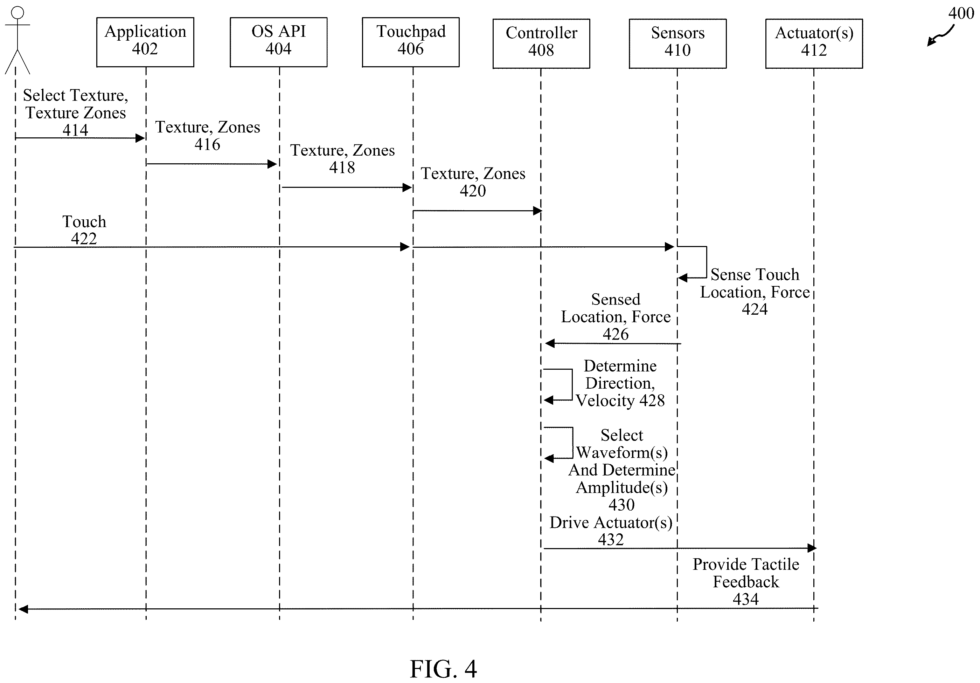

FIG. 4 shows a diagram of an example interaction diagram 400 for adaptive tactile feedback with customizable texture simulation, in accordance with an example embodiment. Example interactions are shown between application 402, OS API 404, touchpad 406, controller 408, sensors 410, and actuator(s) 412. Components in FIG. 4 correspond to similarly named components in FIGS. 1-3. Example interaction diagram 400 comprises operations or steps 414 to 434, which may repeat (e.g., periodically) in part or in whole. However, other embodiments may operate according to other interaction diagrams. Other structural and operational embodiments will be apparent to persons skilled in the relevant art(s) based on the foregoing discussion of embodiments. No order of steps is required unless expressly indicated or inherently required. There is no requirement that an interaction diagram embodiment implement all of the steps illustrated in FIG. 4. FIG. 4 is simply one of many possible embodiments. Embodiments may implement fewer, more or different steps.

As shown in example interaction diagram 400, at step 414, a user selects a texture for simulation and any texture zones for a touchpad. A user may indicate the selection in a user interface provided by application 402. The selection is provided to application 402. In other examples, application 402 selects the texture(s) and zone(s) for the touchpad. For example, a gaming application may select texture zones for touchpad simulation responsive to user traversal of a game environment.

At step 416, the selected texture and zones are provided by application 402 to OS API 404. At step 418, the selected texture and zones are provided by OS API 404 to touchpad 406. At step 420, the selected texture and zones are provided by touchpad 406 to controller 408.

At step 422, a user touches touchpad 406. At step 424, the touch input is detected by sensors 410. For example, sensors 410 detect the touch location and applied force. At step 426, controller 408 detects (e.g., samples) the signals generated by sensors 410 in response to user touch 422.

At step 428, controller 408 determines one or more attributes associated with user touch 422. For example, given user touch location(s) and applied force(s), controller 408 determines the direction and velocity of user touch 422.

At step 430, controller 408 selects one or more waveforms and selects one or more amplitudes of the waveforms based on the touch attributes (e.g., location, force, direction, velocity) and based on how the actuator(s) is(are) implemented, which may be factored into the algorithm that selects the waveform(s) and waveform amplitude(s).

At step 432, controller 408 drives actuator(s) 412 by providing signal(s) to actuator(s) 412 based on the selected waveform(s) and waveform amplitude(s). At step 434, actuator(s) provide tactile feedback to the user based on the signal(s) received from controller 408.

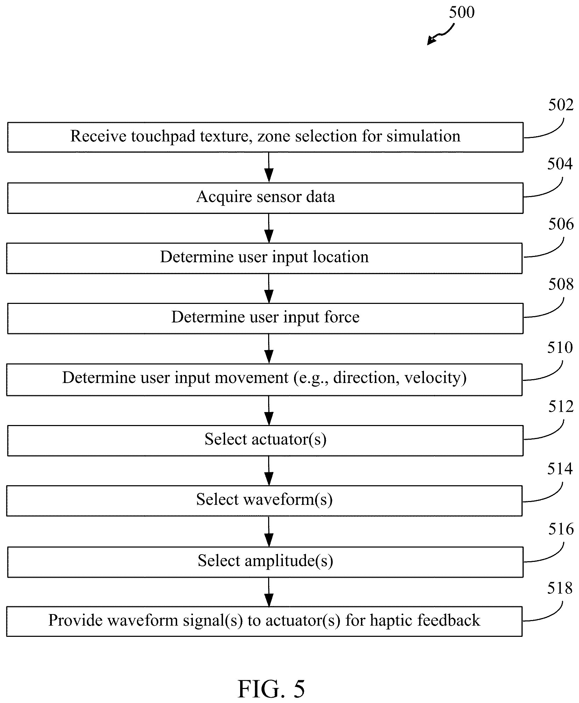

Embodiments disclosed herein may operate in various ways. For instance, FIG. 5 shows a flow diagram 500 of providing adaptive tactile feedback with customizable texture simulation, in accordance with an embodiment. Embodiments disclosed herein and other embodiments may operate in accordance with examples shown in FIGS. 1-4. Example flow diagram 500 shows an example method of providing adaptive tactile feedback with customizable texture simulation executed by touchpad 120/200/304/406, including associated components, e.g., controller 408, sensors 410, actuator(s) 412. Method 500 comprises steps 502-518. However, other embodiments may operate according to other methods, such as described with respect to FIG. 5. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 5. FIG. 5 is simply one of many possible embodiments. Embodiments may implement fewer, more or different steps.

Method 500 comprises step 502. In step 502, touchpad texture and zone selections to be simulated by the touchpad are received, e.g., by the touchpad from an application. For example, as shown in FIGS. 1, 2, and 4, application 114 receives a selection or makes a selection of one or more textures and any texture zoning to be applied to touchpad 120.Application 114 provides the selection to OS 126 via API 112, OS 126 provides the selection to touchpad 120, and the controller 206/408 in touchpad executing the customizable texture simulator with adaptive tactile feedback 130 processes the selected texture and zoning.

In step 504, sensor data is acquired. For example, as shown in FIGS. 2 and 4, sensors 410 (e.g., touch sensor(s) 208 and pressure sensor(s) 210) generate signals in response to user touch 422.

In step 506, the location attribute of user input is determined. For example, as shown in FIGS. 2-4, location calculator 218 determines the location of user input based on the signal(s) generated by touch sensor(s) 208.

In step 508, the force attribute of user input is determined. For example, as shown in FIG. 2, force calculator 224 determines the force applied for user input based on the signal(s) generated by pressure sensor(s) 210.

In step 510, the movement attributes of user input (e.g., direction, velocity). For example, as shown in FIG. 2, direction calculator 220 determines the direction of user input and velocity calculator 222 determines the velocity of user input based on signals generated by touch sensor(s) 208. Signals generated by touch sensor(s) 208 can be associated with time information to determine the velocity of strokes, taps, etc. on touch pad.

In step 512, one or more actuators are selected to provide haptic feedback responsive to user input. For example, as shown in FIG. 2, if there is more than one actuator, actuator selector 228 selects the actuator(s) that will provide haptic feedback.

In step 514, one or more waveforms are selected for the one or more actuators selected to provide haptic feedback. For example, as shown in FIG. 2, waveform selector 230 selects one or more waveforms to apply to one or more actuators selected to provide the haptic feedback.

In step 516, one or more amplitudes are selected for the one or more waveforms for the one or more actuators selected to provide haptic feedback. For example, as shown in FIG. 2, amplitude selector 232 selects one or more amplitudes for one or more waveforms for one or more actuators selected to provide the haptic feedback.

In step 518, one or more waveform signals are provided to the one or more selected actuators to provide the haptic feedback. For example, as shown in FIG. 2, actuator driver(s) 234 drive the one or more actuators 212 with one or more signals based on the selected waveform(s) with the selected amplitude(s).

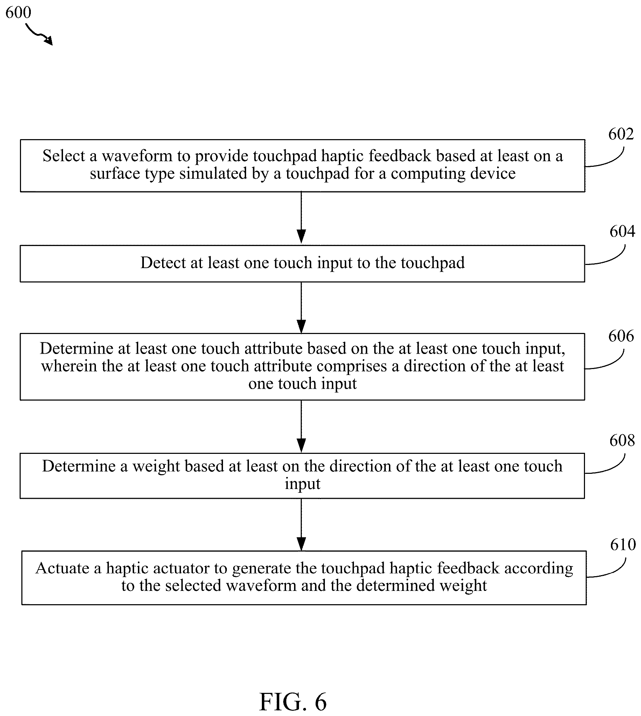

FIG. 6 shows a flowchart 600 of a process for providing adaptive tactile feedback with customizable texture simulation, according to an embodiment. Embodiments disclosed herein and other embodiments may operate in accordance with examples shown in FIGS. 1-4. Flowchart 600 shows an example method of providing adaptive tactile feedback with customizable texture simulation executed by touchpad 120/200/304/406, including associated components, e.g., controller 408, sensors 410, actuator(s) 412. The example shown in FIG. 6 includes operations 602-610. There is no requirement that a method embodiment implement all of the steps illustrated in FIG. 6. FIG. 6 is simply one of many possible embodiments. Various embodiments may implement one or more operations shown in FIG. 6 with additional and/or alternative steps. Further structural and operational embodiments will be apparent to persons skilled in the relevant art(s) based on the following description of FIG. 6.

Flowchart 600 comprises step 602. In step 602, a waveform is selected to provide touchpad haptic feedback based at least on a surface type simulated by a touchpad for a computing device. For example, as shown in FIG. 2, waveform selector 230 selects one or more waveforms to apply to one or more actuators selected to provide the haptic feedback. Waveform selection is based on the texture simulation(s) being performed by the touchpad 200.

In step 604, at least one touch input to the touchpad is detected. For example, as shown in FIG. 2, when a user touches touchpad 200, the touch input is detected by touch sensor(s) 208 and pressure sensor(s) 210. As shown in FIG. 4, controller 408 detects (e.g., samples) the signals generated by sensors 410 (e.g., touch sensor(s) 208 and pressure sensor(s) 210) in response to user touch 422.

In step 606, at least one touch attribute (e.g., location, direction, speed/velocity, pressure/force) is determined based on the at least one detected touch input, wherein the at least one touch attribute comprises a direction of the at least one touch input. For example, as shown in FIG. 2, location calculator 218 determines the location of a touch based on signals provided by touch sensor(s) 208. Direction calculator 220 determines the direction of a touch or multiple touches. Velocity calculator 222 determines the velocity of a touch based on signals provided by touch sensor(s) 208. Force calculator 224 determines the force applied at x,y coordinates in a touch based on signals generated by pressure sensor(s) 210. Similarly, FIGS. 3-5 show the determination of touch attributes based on the detected touch input indicated by touch and pressure sensors.

In step 608, a weight is determined based at least on the direction of the at least one touch input. For example, as shown in FIG. 2, amplitude selector 232 selects a weight (e.g., amplitude) for the waveform selected for the actuator(s) to provide the haptic feedback.

In step 610, a haptic actuator is actuated to generate the touchpad haptic feedback according to the selected waveform and the determined weight. For example, as shown in FIG. 2, actuator driver(s) 234 drive the actuator(s) 212 with one or more signals based on the selected waveform with the selected weight (e.g., amplitude).

### III. Example Computing Device Embodiments

Touchpad 120/200/304/406, customizable texture simulator with adaptive tactile feedback 130/204, location calculator 218, direction calculator 220/310, velocity calculator 222/308, force calculator 224/312, waveform generator 226, actuator selector 228/322, waveform selector 230/318, amplitude selector 232/320, actuator driver(s) 234/324/326, input detector 242, touchpad haptic feedback enabler 244, and flowcharts 500 and 600 are each implemented with computer program code/instructions configured to be executed in one or more processors and stored in a computer readable storage medium. Alternatively, touchpad 120/200/304/406, customizable texture simulator with adaptive tactile feedback 130/204, location calculator 218, direction calculator 220/310, velocity calculator 222/308, force calculator 224/312, waveform generator 226, actuator selector 228/322, waveform selector 230/318, amplitude selector 232/320, actuator driver(s) 234/324/326, input detector 242, touchpad haptic feedback enabler 244, and flowcharts 500 and 600 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 7. FIG. 7 shows a block diagram of an exemplary computing environment 700 that includes a computing device 702. Computing device 702 is an example of computing device 100, which may include one or more of the components of computing device 702. In some embodiments, computing device 702 is communicatively coupled with devices (not shown in FIG. 7) external to computing environment 700 via network 704. Network 704 comprises one or more networks such as local area networks (LANs), wide area networks (WANs), enterprise networks, the Internet, etc. In examples, network 704 includes one or more wired and/or wireless portions. In some examples, network 704 additionally or alternatively includes a cellular network for cellular communications. Computing device 702 is described in detail as follows.

Computing device 702 is any of a variety of types of computing devices. Examples of computing device 702 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 702 is a stationary computing device such as a desktop computer, a personal computer (PC), a stationary server device, a minicomputer, a mainframe, a supercomputer, etc.

As shown in FIG. 7, computing device 702 includes a variety of hardware and software components, including a processor 710, a storage 720, a graphics processing unit (GPU) 742, a neural processing unit (NPU) 744, one or more input devices 730, one or more output devices 750, one or more wireless modems 760, one or more wired interfaces 780, a power supply 782, a location information (LI) receiver 784, and an accelerometer 786. Storage 720 includes memory 756, which includes non-removable memory 722 and removable memory 724, and a storage device 788. Storage 720 also stores an operating system 712, application programs 714, and application data 716. Wireless modem(s) 760 include a Wi-Fi modem 762, a Bluetooth modem 764, and a cellular modem 766. Output device(s) 750 includes a speaker 752 and a display 754. Input device(s) 730 includes a touch screen 732, a microphone 734, a camera 736, a physical keyboard 738, and a trackball 740. Not all components of computing device 702 shown in FIG. 7 are present in all embodiments, additional components not shown may be present, and in a particular embodiment any combination of the components are present. In examples, components of computing device 702 are mounted to a circuit card (e.g., a motherboard) of computing device 702, integrated in a housing of computing device 702, or otherwise included in computing device 702. The components of computing device 702 are described as follows.

In embodiments, a single processor 710 (e.g., central processing unit (CPU), microcontroller, a microprocessor, signal processor, ASIC (application specific integrated circuit), and/or other physical hardware processor circuit) or multiple processors 710 are present in computing device 702 for performing such tasks as program execution, signal coding, data processing, input/output processing, power control, and/or other functions. In examples, processor 710 is a single-core or multi-core processor, and each processor core is single-threaded or multithreaded (to provide multiple threads of execution concurrently). Processor 710 is configured to execute program code stored in a computer readable medium, such as program code of operating system 712 and application programs 714 stored in storage 720. The program code is structured to cause processor 710 to perform operations, including the processes/methods disclosed herein. Operating system 712 controls the allocation and usage of the components of computing device 702 and provides support for one or more application programs 714 (also referred to as "applications" or "apps"). In examples, application programs 714 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 710 includes one or more general processors (e.g., CPUs) configured with or coupled to one or more hardware accelerators, such as one or more NPUs 744 and/or one or more GPUs 742.

Any component in computing device 702 can communicate with any other component according to function, although not all connections are shown for ease of illustration. For instance, as shown in FIG. 7, bus 706 is a multiple signal line communication medium (e.g., conductive traces in silicon, metal traces along a motherboard, wires, etc.) present to communicatively couple processor 710 to various other components of computing device 702, although in other embodiments, an alternative bus, further buses, and/or one or more individual signal lines is/are present to communicatively couple components. Bus 706 represents one or more of any of several types of bus structures, including a memory bus or memory controller, a peripheral bus, an accelerated graphics port, and a processor or local bus using any of a variety of bus architectures.

Storage 720 is physical storage that includes one or both of memory 756 and storage device 788, which store operating system 712, application programs 714, and application data 716 according to any distribution. Non-removable memory 722 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 722 includes main memory and is separate from or fabricated in a same integrated circuit as processor 710. As shown in FIG. 7, non-removable memory 722 stores firmware 718 that is present to provide low-level control of hardware. Examples of firmware 718 include BIOS (Basic Input/Output System, such as on personal computers) and boot firmware (e.g., on smart phones). In examples, removable memory 724 is inserted into a receptacle of or is otherwise coupled to computing device 702 and can be removed by a user from computing device 702. Removable memory 724 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 788 are present that are internal and/or external to a housing of computing device 702 and are or are not removable. Examples of storage device 788 include a hard disk drive, a SSD, a thumb drive (e.g., a USB (Universal Serial Bus) flash drive), or other physical storage device.

One or more programs are stored in storage 720. Such programs include operating system 712, one or more application programs 714, and other program modules and program data. Examples of such application programs include computer program logic (e.g., computer program code/instructions) for implementing touchpad 120/200/304/406, customizable texture simulator with adaptive tactile feedback 130/204, location calculator 218, direction calculator 220/310, velocity calculator 222/308, force calculator 224/312, waveform generator 226, actuator selector 228/322, waveform selector 230/318, amplitude selector 232/320, actuator driver(s) 234/324/326, input detector 242, touchpad haptic feedback enabler 244, and flowcharts 500 and 600 (and/or any individual operations/steps thereof).

Storage 720 also stores data used and/or generated by operating system 712 and application programs 714 as application data 716. Examples of application data 716 include web pages, text, images, tables, sound files, video data, and other data. In examples, application data 716 is sent to and/or received from one or more network servers or other devices via one or more wired or wireless networks. Storage 720 is used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 702 through one or more input devices 730 and receives information from computing device 702 through one or more output devices 750. Input device(s) 730 includes one or more of touch screen 732, microphone 734, camera 736, physical keyboard 738, and/or trackball 740 and output device(s) 750 includes one or more of speaker 752 and display 754. Each of input device(s) 730 and output device(s) 750 are integral to computing device 702 (e.g., built into a housing of computing device 702) or are external to computing device 702 (e.g., communicatively coupled wired or wirelessly to computing device 702 via wired interface(s) 780 and/or wireless modem(s) 760). Further input devices 730 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 754 displays information, as well as operating as touch screen 732 by receiving user commands and/or other information (e.g., by touch, finger gestures, virtual keyboard, etc.) as a user interface. Any number of each type of input device(s) 730 and output device(s) 750 are present, including multiple microphones 734, multiple cameras 736, multiple speakers 752, and/or multiple displays 754.

In embodiments where GPU 742 is present, GPU 742 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 742 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 744 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 728. In an example, NPU 744 is configured for a data-driven parallel computing and is highly efficient at processing massive multimedia data such as videos and images and processing data for neural networks. NPU 744 is configured for efficient handling of AI-related tasks, such as speech recognition, background blurring in video calls, photo or video editing processes like object detection, etc.

In embodiments disclosed herein that implement ML models, NPU 744 can be utilized to execute such ML models, of which MLM 728 is an example. For instance, where applicable, MLM 728 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 744 is used to train MLM 728. To train MLM 728, training data is that includes input features (attributes) and their corresponding output labels/target values (e.g., for supervised learning) is collected. A training algorithm is a computational procedure that is used so that MLM 728 learns from the training data. Examples of training inputs for ML model training include user position, angle, gesture, time of day, location, user crypto, etc. Parameters/weights are internal settings of MLM 728 that are adjusted during training by the training algorithm to reduce a difference between predictions by MLM 728 and actual outcomes (e.g., output labels). In some examples, MLM 728 is set with initial values for the parameters/weights. A loss function measures a dissimilarity between predictions by MLM 728 and the target values, and the parameters/weights of MLM 728 are adjusted to minimize the loss function. The parameters/weights are iteratively adjusted by an optimization technique, such as gradient descent. In this manner, MLM 728 is generated through training by NPU 744 to be used to generate inferences based on received input feature sets for particular applications. MLM 728 is generated as a computer program or other type of algorithm configured to generate an output (e.g., a classification, a prediction/inference) based on received input features and is stored in the form of a file or other data structure.

In examples, such training of MLM 728 by NPU 744 is supervised or unsupervised. According to supervised learning, input objects (e.g., a vector of predictor variables) and a desired output value (e.g., a human-labeled supervisory signal) train MLM 728. The training data is processed, building a function that maps new data on expected output values. Example algorithms usable by NPU 744 to perform supervised training of MLM 728 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 728 is an LLM, MLM 728 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 728 is trained to learn patterns from unlabeled data. For instance, in embodiments where MLM 728 implements unsupervised learning techniques, MLM 728 identifies one or more classifications or clusters to which an input belongs. During a training phase of MLM 728 according to unsupervised learning, MLM 728 tries to mimic the provided training data and uses the error in its mimicked output to correct itself (i.e., correct weights and biases). In further examples, NPU 744 perform unsupervised training of MLM 728 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 744 need not necessarily be present in all ML model embodiments. In embodiments where ML models are present, any one or more of processor 710, GPU 742, and/or NPU 744 can be present to train and/or execute MLM 728.

One or more wireless modems 760 can be coupled to antenna(s) (not shown) of computing device 702 and can support two-way communications between processor 710 and devices external to computing device 702 through network 704, as would be understood to persons skilled in the relevant art(s). Wireless modem 760 is shown generically and can include a cellular modem 766 for communicating with one or more cellular networks, such as a GSM network for data and voice communications within a single cellular network, between cellular networks, or between the mobile device and a public switched telephone network (PSTN). In examples, wireless modem 760 also or alternatively includes other radio-based modem types, such as a Bluetooth modem 764 (also referred to as a "Bluetooth device") and/or Wi-Fi modem 762 (also referred to as an "wireless adaptor"). Wi-Fi modem 762 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 764 is configured to communicate with another Bluetooth-capable device according to the Bluetooth short-range wireless technology standard(s) such as IEEE 802.15.1 and/or managed by the Bluetooth Special Interest Group (SIG).

Computing device 702 can further include power supply 782, LI receiver 784, accelerometer 786, and/or one or more wired interfaces 780. Example wired interfaces 780 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 780 of computing device 702 provide for wired connections between computing device 702 and network 704, or between computing device 702 and one or more devices/peripherals when such devices/peripherals are external to computing device 702 (e.g., a pointing device, display 754, speaker 752, camera 736, physical keyboard 738, etc.). Power supply 782 is configured to supply power to each of the components of computing device 702 and receives power from a battery internal to computing device 702, and/or from a power cord plugged into a power port of computing device 702 (e.g., a USB port, an A/C power port). LI receiver 784 is useable for location determination of computing device 702 and in examples includes a satellite navigation receiver such as a Global Positioning System (GPS) receiver and/or includes other type of location determiner configured to determine location of computing device 702 based on received information (e.g., using cell tower triangulation, etc.). Accelerometer 786, when present, is configured to determine an orientation of computing device 702.

Note that the illustrated components of computing device 702 are not required or all-inclusive, and fewer or greater numbers of components can be present as would be recognized by one skilled in the art. In examples, computing device 702 includes one or more of a gyroscope, barometer, proximity sensor, ambient light sensor, digital compass, etc. In an example, processor 710 and memory 756 are co-located in a same semiconductor device package, such as being included together in an integrated circuit chip, FPGA, or system-on-chip (SOC), optionally along with further components of computing device 702.

In embodiments, computing device 702 is configured to implement any of the above-described features of flowcharts herein. Computer program logic for performing any of the operations, steps, and/or functions described herein is stored in storage 720 and executed by processor 710.

In some embodiments, server infrastructure 770 is present in computing environment 700 and is communicatively coupled with computing device 702 via network 704. Server infrastructure 770, when present, is a network-accessible server set (e.g., a cloud-based environment or platform). As shown in FIG. 7, server infrastructure 770 includes clusters 772. Each of clusters 772 comprises a group of one or more compute nodes and/or a group of one or more storage nodes. For example, as shown in FIG. 7, cluster 772 includes nodes 774. Each of nodes 774 are accessible via network 704 (e.g., in a "cloud-based" embodiment) to build, deploy, and manage applications and services. In examples, any of nodes 774 is a storage node that comprises a plurality of physical storage disks, SSDs, and/or other physical storage devices that are accessible via network 704 and are configured to store data associated with the applications and services managed by nodes 774.

Each of nodes 774, as a compute node, comprises one or more server computers, server systems, and/or computing devices. For instance, a node 774 in accordance with an embodiment includes one or more of the components of computing device 702 disclosed herein. Each of nodes 774 is configured to execute one or more software applications (or "applications") and/or services and/or manage hardware resources (e.g., processors, memory, etc.), which are utilized by users (e.g., customers) of the network-accessible server set. In examples, as shown in FIG. 7, nodes 774 includes a node 746 that includes storage 748 and/or one or more of a processor 758 (e.g., similar to processor 710, GPU 742, and/or NPU 744 of computing device 702). Storage 748 stores application programs 776 and application data 778. Processor(s) 758 operates application programs 776 which access and/or generate related application data 778. In an implementation, nodes such as node 746 of nodes 774 operate or comprise one or more virtual machines, with each virtual machine emulating a system architecture (e.g., an operating system), in an isolated manner, upon which applications such as application programs 776 are executed.

In embodiments, one or more of clusters 772 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 772 are included in a datacenter in a distributed collection of datacenters. In embodiments, exemplary computing environment 700 comprises part of a cloud-based platform.

In an embodiment, computing device 702 accesses application programs 776 for execution in any manner, such as by a client application and/or a browser at computing device 702.

In an example, for purposes of network (e.g., cloud) backup and data security, computing device 702 additionally and/or alternatively synchronizes copies of application programs 714 and/or application data 716 to be stored at network-based server infrastructure 770 as application programs 776 and/or application data 778. In examples, operating system 712 and/or application programs 714 include a file hosting service client configured to synchronize applications and/or data stored in storage 720 at network-based server infrastructure 770.

In some embodiments, on-premises servers 792 are present in computing environment 700 and are communicatively coupled with computing device 702 via network 704. On-premises servers 792, when present, are hosted within an organization's infrastructure and, in many cases, physically onsite of a facility of that organization. On-premises servers 792 are controlled, administered, and maintained by IT (Information Technology) personnel of the organization or an IT partner to the organization. Application data 798 can be shared by on-premises servers 792 between computing devices of the organization, including computing device 702 (when part of an organization) through a local network of the organization, and/or through further networks accessible to the organization (including the Internet). Furthermore, in examples, on-premises servers 792 serve applications such as application programs 796 to the computing devices of the organization, including computing device 702. Accordingly, in examples, on-premises servers 792 include storage 794 (which includes one or more physical storage devices such as storage disks and/or SSDs) for storage of application programs 796 and application data 798 and include a processor 790 (e.g., similar to processor 710, GPU 742, and/or NPU 744 of computing device 702) for execution of application programs 796. In some embodiments, multiple processors 790 are present for execution of application programs 796 and/or for other purposes. In further examples, computing device 702 is configured to synchronize copies of application programs 714 and/or application data 716 for backup storage at on-premises servers 792 as application programs 796 and/or application data 798.

Embodiments described herein may be implemented in one or more of computing device 702, network-based server infrastructure 770, and on-premises servers 792. For example, in some embodiments, computing device 702 is used to implement systems, clients, or devices, or components/subcomponents thereof, disclosed elsewhere herein. In other embodiments, a combination of computing device 702, network-based server infrastructure 770, and/or on-premises servers 792 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 720. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules, or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 714) are stored in storage 720. Such computer programs can also be received via wired interface(s) 760 and/or wireless modem(s) 760 over network 704. Such computer programs, when executed or loaded by an application, enable computing device 702 to implement features of embodiments discussed herein. Accordingly, such computer programs represent controllers of the computing device 702.

Embodiments are also directed to computer program products comprising computer code or instructions stored on any computer-readable medium or computer-readable storage medium. Such computer program products include the physical storage of storage 720 as well as further physical storage types.

### IV. Additional Example Embodiments

Embodiments described herein enable an adaptive tactile feedback touchpad with customizable texture simulation. Touchpad tactile feedback can be adapted to provide realistic, nuanced sensations associated with different textures by sensing touch input attributes, such as input location and force, and determining additional touch attributes, such as direction and velocity, from a time-series set of touch inputs. A broader set of touch attributes (e.g., touch location, force, direction, velocity) allows nuanced adaptation of a relatively large area haptic actuator associated with a touchpad. One or more touchpad haptic actuators can be implemented in one or more axes of a touchpad to provide tactile sensations over a relatively large area. For example, a haptic actuator implemented only in the x axis of a touchpad can be controlled with varying amplitudes (e.g., weights) to provide consistent tactile sensations regardless of the location and direction that a user touches and moves a finger on the touchpad (e.g., x direction, y direction, 45 degree angle, and so on). A haptic waveform can be selected, for example, based on the simulated texture and input velocity while a waveform amplitude can be determined, for example, based on input force, direction, and velocity. The haptic actuator(s) can be controlled by the selected waveform and determined amplitude to provide realistic tactile sensations regardless where the user interacts with the touchpad.

In some examples, a computing device comprises a touchpad configured to provide touchpad haptic feedback via a haptic actuator. An application includes a user interface configured to receive a user's selection of a surface type for the touchpad to simulate by way of haptic feedback. The device comprises an operating system communication interface comprising an application programming interface (API) configured to provide the selected surface type to the touchpad. The device comprises a microcontroller configured to execute a haptic feedback algorithm, which includes a waveform selector, a touch sensor, an attribute determiner, an amplitude selector, and a haptic actuator. The waveform selector is configured to select a waveform for the touchpad haptic feedback based at least on a simulated surface type. The touch sensor is configured to detect at least one touch input to the touch pad. The attribute determiner is configured to determine at least one touch attribute (e.g., direction, speed/velocity, pressure/force) based on the at least one touch input. The amplitude selector is configured to determine a weight (e.g., amplitude) based at least on the direction (e.g., direction, speed, and force) of the at least one touch input. The actuator controller is configured to actuate the haptic actuator to generate the touchpad haptic feedback according to the selected waveform and the determined weight.

In some examples, the at least one touch attribute comprises a velocity of the at least one touch input. The waveform selector is configured to select the waveform based on the simulated surface type and the velocity of the at least one touch input.

In some examples, the computing device further comprises a pressure sensor configured to detect a force of the at least one touch input. The at least one touch attribute comprises a velocity of the at least one touch input. The amplitude selector is configured to determine the weight based on the direction, velocity, and force of the at least one touch input.

In some examples, the haptic actuator is configured to generate the touchpad haptic feedback along a first axis of the touchpad.

In some examples, the haptic actuator is configured to generate the touchpad haptic feedback along a first axis and a second axis of the touchpad.

In some examples, the haptic actuator comprises a first haptic actuator configured to generate the touchpad haptic feedback along the first axis and a second haptic actuator configured to generate the touchpad haptic feedback along the second axis. The computing device further comprises an actuator selector configured to select at least one of the first actuator and the second actuator to generate the touchpad haptic feedback.

In some examples, the haptic actuator comprises a first haptic actuator configured to generate the touchpad haptic feedback along the first axis and a second haptic actuator configured to generate the touchpad haptic feedback along the second axis. The waveform selector is configured to select a first waveform for the first haptic actuator and a second waveform for the second haptic actuator. The amplitude selector is configured to determine a first weight for the first haptic actuator and a second weight for the second haptic actuator. An actuator driver is configured to actuate the first haptic actuator to generate the touchpad haptic feedback according to the selected first waveform and the determined first weight and to actuate the second haptic actuator to generate the touchpad haptic feedback according to the selected second waveform and the determined second weight.

In some examples, the computing device further comprises an operating system communication interface comprising a texture mapping application programming interface configured to allow an application to define different texture zones mapped to the touchpad.

In some examples, the computing device further comprises an input detector configured to determine whether touch input is provided by a user's hand or an input device (e.g., stylus); and a touchpad haptic feedback enabler configured to enable the touchpad haptic feedback responsive to a determination that the at least one touch input is provided by the user's hand and to disable the touchpad haptic feedback in response to a determination that the at least one touch input is provided by the input device.

Methods are described herein. In some examples, a method comprises selecting a waveform to provide touchpad haptic feedback based at least on a surface type simulated by a touchpad for a computing device; detecting at least one touch input to the touch pad; determining at least one touch attribute based on the at least one touch input (e.g., the at least one touch attribute comprises a direction of the at least one touch input); determining a weight based at least on the direction of the at least one touch input; and actuating a haptic actuator to generate the touchpad haptic feedback according to the selected waveform and the determined weight.

In some examples, the at least one touch attribute comprises a velocity of the at least one touch input. The waveform is selected based on the simulated surface type and the velocity of the at least one touch input.

In some examples, the method further comprises detecting a force of the at least one touch input. The at least one touch attribute comprises a velocity of the at least one touch input. The weight is determined based on the direction, velocity, and force of the at least one touch input.

In some examples, the touchpad haptic feedback is generated along a first axis of the touchpad.

In some examples, the touchpad haptic feedback is generated along a first axis and a second axis of the touchpad.

In some examples, the method further comprises selecting at least one of a first actuator to generate the touchpad haptic feedback along the first axis and a second actuator to generate the touchpad haptic feedback along the second axis.

In some examples, the selection of the waveform comprises selecting a first waveform for haptic feedback along the first axis and selecting a second waveform for haptic feedback along the second axis. The determination of the weight comprises determining a first weight for haptic feedback along the first axis determining a second weight for haptic feedback along the second axis. The actuation of the haptic actuator comprises actuating a first haptic actuator to generate the touchpad haptic feedback according to the selected first waveform and the determined first weight and actuating a second haptic actuator to generate the touchpad haptic feedback according to the selected second waveform and the determined second weight.

In some examples, the method further comprises determining whether touch input is provided by a user's hand or an input device; and enabling the touchpad haptic feedback responsive to a determination that the at least one touch input is provided by the user's hand and disabling the touchpad haptic feedback in response to a determination that the at least one touch input is provided by the input device.

A computer-readable storage medium is described herein. The computer-readable storage medium has computer program logic recorded thereon that, executed by a processor circuit, causes the processor circuit to perform a method. The method may comprise, for example, any combination of operations described herein.

For example, the method may comprise selecting a waveform to provide touchpad haptic feedback based at least on a surface type simulated by a touchpad for a computing device; detecting at least one touch input to the touch pad; determining at least one touch attribute based on the at least one touch input (e.g., the at least one touch attribute comprises a direction of the at least one touch input); determining a weight based at least on the direction of the at least one touch input; and actuating a haptic actuator to generate the touchpad haptic feedback according to the selected waveform and the determined weight.

In some examples, the at least one touch attribute comprises a velocity of the at least one touch input. The waveform is selected based on the simulated surface type and the velocity of the at least one touch input.

In some examples, the method further comprises detecting a force of the at least one touch input. The at least one touch attribute comprises a velocity of the at least one touch input. The weight is determined based on the direction, velocity, and force of the at least one touch input.

In some examples, an adaptive tactile feedback touchpad with customizable texture simulation adapts feedback to provide realistic, nuanced sensations associated with different textures by sensing touch input attributes, such as input location and force, and determining additional touch attributes, such as direction and velocity, from a time-series set of touch inputs. Touchpad haptic actuators implemented in one or more axes of a touchpad can be controlled with varying amplitudes (e.g., weights) to provide consistent tactile sensations regardless of the location and direction that a user touches and moves a finger on the touchpad. A haptic waveform can be selected, for example, based on the simulated texture and input velocity while a waveform amplitude can be determined based on input force, direction, and velocity. The haptic actuator(s) can be controlled by the selected waveform and determined amplitude to provide realistic tactile sensations regardless where the user interacts with the touchpad.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, computing devices, servers, device management services, virtual machine provisioners, applications, and/or data stores and their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (e.g., or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (e.g., computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

## Claims

1. A computing device that includes a touchpad configured to provide touchpad haptic feedback, the computing device comprising:
a waveform selector configured to select a waveform for the touchpad haptic feedback based at least on a simulated surface type;
a touch sensor configured to detect at least one touch input to the touch pad;
an attribute determiner configured to determine at least one touch attribute based on the at least one touch input, wherein the at least one touch attribute comprises a direction of the at least one touch input;
an amplitude selector configured to determine a weight based at least on the direction of the at least one touch input; and
a haptic actuator configured to generate the touchpad haptic feedback according to the selected waveform and the determined weight.

2. The computing device of claim 1, wherein the at least one touch attribute comprises a velocity of the at least one touch input; and
wherein the waveform selector is configured to select the waveform based on the simulated surface type and the velocity of the at least one touch input.

3. The computing device of claim 1, further comprising:
a pressure sensor configured to detect a force of the at least one touch input;
wherein the at least one touch attribute comprises a velocity of the at least one touch input; and
wherein the amplitude selector is configured to determine the weight based on the direction, velocity, and force of the at least one touch input.

4. The computing device of claim 1, wherein the haptic actuator is configured to generate the touchpad haptic feedback along a first axis of the touchpad or configured to generate the touchpad haptic feedback along a first axis and a second axis of the touchpad.

5. The computing device of claim 1, wherein the haptic actuator is configured to generate the touchpad haptic feedback along a first axis and a second axis of the touchpad;
wherein the haptic actuator comprises a first haptic actuator configured to generate the touchpad haptic feedback along the first axis and a second haptic actuator configured to generate the touchpad haptic feedback along the second axis, the computing device further comprising: an actuator selector configured to select at least one of the first actuator and the second actuator to generate the touchpad haptic feedback; or
alternatively, wherein the waveform selector is configured to select a first waveform for the first haptic actuator and a second waveform for the second haptic actuator;
wherein the amplitude selector is configured to determine a first weight for the first haptic actuator and a second weight for the second haptic actuator; and
wherein an actuator driver is configured to actuate the first haptic actuator to generate the touchpad haptic feedback according to the selected first waveform and the determined first weight and to actuate the second haptic actuator to generate the touchpad haptic feedback according to the selected second waveform and the determined second weight.

6. The computing device of claim 1,
further comprising: an operating system communication interface comprising a texture mapping application programming interface configured to allow an application to define different texture zones mapped to the touchpad; or
further comprising: an input detector configured to determine whether touch input is provided by a user's hand or an input device; and
a touchpad haptic feedback enabler configured to enable the touchpad haptic feedback responsive to a determination that the at least one touch input is provided by the user's hand and to disable the touchpad haptic feedback in response to a determination that the at least one touch input is provided by the input device.

7. A method, comprising:
selecting a waveform to provide touchpad haptic feedback based at least on a surface type simulated by a touchpad for a computing device;
detecting at least one touch input to the touch pad;
determining at least one touch attribute based on the at least one touch input,
wherein the at least one touch attribute comprises a direction of the at least one touch input;
determining a weight based at least on the direction of the at least one touch input; and
actuating a haptic actuator to generate the touchpad haptic feedback according to the selected waveform and the determined weight.

8. The method of claim 7, wherein the at least one touch attribute comprises a velocity of the at least one touch input; and
wherein the waveform is selected based on the simulated surface type and the velocity of the at least one touch input.

9. The method of claim 7, further comprising:
detecting a force of the at least one touch input;
wherein the at least one touch attribute comprises a velocity of the at least one touch input; and
wherein the weight is determined based on the direction, velocity, and force of the at least one touch input.

10. The method of claim 7, wherein the touchpad haptic feedback is generated along a first axis of the touchpad or is generated along a first axis and a second axis of the touchpad.

11. The method of claim 7, wherein the touchpad haptic feedback is generated along a first axis and a second axis of the touchpad,
wherein the method further comprises selecting at least one of a first actuator to generate the touchpad haptic feedback along the first axis and a second actuator to generate the touchpad haptic feedback along the second axis; or
alternatively, wherein the selection of the waveform comprises selecting a first waveform for haptic feedback along the first axis and selecting a second waveform for haptic feedback along the second axis;
wherein the determination of the weight comprises determining a first weight for haptic feedback along the first axis determining a second weight for haptic feedback along the second axis; and
wherein the actuation of the haptic actuator comprises actuating a first haptic actuator to generate the touchpad haptic feedback according to the selected first waveform and the determined first weight and actuating a second haptic actuator to generate the touchpad haptic feedback according to the selected second waveform and the determined second weight.

12. The method of claim 7, further comprising:
determining whether touch input is provided by a user's hand or an input device; and
enabling the touchpad haptic feedback responsive to a determination that the at least one touch input is provided by the user's hand and disabling the touchpad haptic feedback in response to a determination that the at least one touch input is provided by the input device.

13. A computer-readable storage medium having program instructions recorded thereon that, when executed by a processing circuit, perform a method comprising:
selecting a waveform to provide touchpad haptic feedback based at least on a surface type simulated by a touchpad for a computing device;
detecting at least one touch input to the touch pad;
determining at least one touch attribute based on the at least one touch input,
wherein the at least one touch attribute comprises a direction of the at least one touch input;
determining a weight based at least on the direction of the at least one touch input; and
actuating a haptic actuator to generate the touchpad haptic feedback according to the selected waveform and the determined weight.

14. The computer-readable storage medium of claim 13, wherein the at least one touch attribute comprises a velocity of the at least one touch input; and
wherein the waveform is selected based on the simulated surface type and the velocity of the at least one touch input.

15. The computer-readable storage medium of claim 13, the method further comprising:
detecting a force of the at least one touch input; and
wherein the at least one touch attribute comprises a velocity of the at least one touch input; and
wherein the weight is determined based on the direction, velocity, and force of the at least one touch input.
